Europäisches Patentamt

European Patent Office

Office européen des brevets

(19)

(11) Veröffentlichungsnummer: **0 404 779 B1**

# (12) EUROPÄISCHE PATENTSCHRIFT

(45) Veröffentlichungstag der Patentschrift: **02.06.93**

(21) Anmeldenummer: **89902237.0**

(22) Anmeldetag: **18.02.89**

(86) Internationale Anmeldenummer:
**PCT/DE89/00095**

(87) Internationale Veröffentlichungsnummer:
**WO 89/08939 (21.09.89 89/23)**

(51) Int. Cl.⁵: **H02J 3/24**

(54) **VERFAHREN ZUR STABILISIERUNG EINES SCHWINGUNGSFÄHIGEN ELEKTRISCHEN VERSORGUNGSNETZES.**

(30) Priorität: **15.03.88 DE 3808660**

(43) Veröffentlichungstag der Anmeldung:
**02.01.91 Patentblatt 91/01**

(45) Bekanntmachung des Hinweises auf die
Patenterteilung:
**02.06.93 Patentblatt 93/22**

(84) Benannte Vertragsstaaten:
**AT CH DE LI**

(56) Entgegenhaltungen:
**DE-A- 3 711 657**
**DE-B- 1 247 452**
**GB-A- 2 159 963**
**US-A- 4 412 171**

(73) Patentinhaber: **SIEMENS AKTIENGESELL-
SCHAFT**
**Wittelsbacherplatz 2**
**W-8000 München 2(DE)**

(72) Erfinder: **ZAVISKA, Oldrich**
**Stettiner Strasse 6**
**W-8520 Erlangen(DE)**

## Beschreibung

Die Erfindung betrifft ein Verfahren sowie eine Einrichtung zur Stabilisierung eines schwingungsfähigen elektrischen Versorgungsnetzes.

In elektrischen Versorgungsnetzen sind verschiedene elektrische Betriebsmittel, z.B. Übertragungsleitungen, Transformatoren, Generatoren und Kondensatoren, miteinander vernetzt. Diese weisen jeweils verschiedene eigene elektrische Verhaltensweisen auf. Aufgrund von Wechselwirkungen zwischen den Verhaltensweisen der Betriebsmittel oder von Betriebsbedingungen eines Betriebsmittels am Versorgungsnetz können Schwingungen, beispielsweise der Frequenz, der Spannung oder auch der Leistung, im Versorgungsnetz entstehen. Wird beispielsweise ein Teilnetz mit dem ihm zugeordneten Generator aus dem Netzverbund herausgenommen und isoliert betrieben - man bezeichnet diesen Vorgang als Inselbildung - so kann das Netz zu Schwingungen neigen. Zur Sicherung eines stabilen Betriebs muß dies erkannt und daraufhin die Regelcharakteristik des für den vorherigen Verbundbetrieb eingestellten Reglers verändert werden.

Bis jetzt werden mannigfache, mehr oder weniger empirisch gefundene und willkürlich gesetzte Kriterien verwendet, um das Vorhandensein eines Inselnetzes bzw. eine beginnende Netzinstabilität zu erkennen und daraufhin eine Strukturumschaltung des Leistungsreglers vorzunehmen. Ein solches Kriterium ist beispielsweise, daß der Leistungsüberschuß des Generators größer als 10 % seiner Nennleistung und gleichzeitig die Netzfrequenzabweichung größer als 1 % ihres Nennwertes ist. Es hat sich aber gezeigt, daß ein solches Kriterium versagt, wenn die Inselbildung ohne einen solchen Leistungsüberschuß erfolgt, was einen durchaus üblichen Betriebsfall darstellt.

In der US-PS 4 412 171 ist eine Schaltungsanordnung zur Bedämpfung von Leistungspendelungen von Synchrongeneratoren in Netzen beschrieben. Dabei wird ein der Frequenz- oder Leistungsänderung entsprechendes Signal sowohl den Eingängen einer Anzahl von diskreten Bandfiltern als auch diesen zugeordneten Phasen- bzw. Winkelmessern zugeführt, deren Ausgänge jeweils Schalter betätigen, mit denen das Ausgangssignal der Bandfilter an zugeordnete, eine gemeinsame Maximum-Auswahlschaltung beaufschlagende Phasendrehglieder weitergegeben werden kann. Das Ausgangssignal der Maximum-Auswahlschaltung liefert dann ein Zusatzsignal für die Erregung des Synchrongenerators. Für kleine Pendelfrequenzen ist ein Tiefpaß vorgesehen, der über einen Grenzwertmelder in Verbindung mit einem Mittelwertbildner und Zeitkippstufen bei Überschreiten bestimmter Grenzwerte ein Reglersignal auf die Erregung des Synchrongenerators zur Wirkung kommen läßt. Es lassen sich mit dieser bekannten Schaltungsanordnung zwar Frequenz- oder Wirkleistungspendelungen erkennen und bedämpfen, der Aufwand für die Auswahl und Zuschaltung des je nach Größe der auftretenden Pendelungsfrequenz jeweils benötigten Bandfilters bzw. Tiefpasses ist aber recht erheblich.

Aufgabe der vorliegenden Erfindung ist es, ein demgegenüber einfacheres Verfahren anzugeben, mit dem der Beginn einer Netzinstabilität zuverlässig erkannt und daran anschließend selbsttätig eine Adaption des Reglers vorgenommen wird.

Gelöst wird diese Aufgabe bei einem Verfahren der eingangs genannten Art erfindungsgeäß dadurch, daß ein der Netzfrequenz proportionales Signal erfaßt wird, während aufeinanderfolgenden Halbwellen dieses Signals maximale Signalwerte ermittelt, abgespeichert und zum Erkennen einer Schwingung miteinander verglichen werden und nach Erkennen einer aufklingenden Schwingung mindestens ein Parameter eines die Leistung, die Spannung oder die Frequenz bestimmenden Reglers so verändert wird, daß die Schwingung abgedämpft wird.

Die Erfindung samt ihren weiteren Ausgestaltungen, welche in Unteransprüchen gekennzeichnet sind, soll nachstehend anhand der Figuren näher erläutert werden.

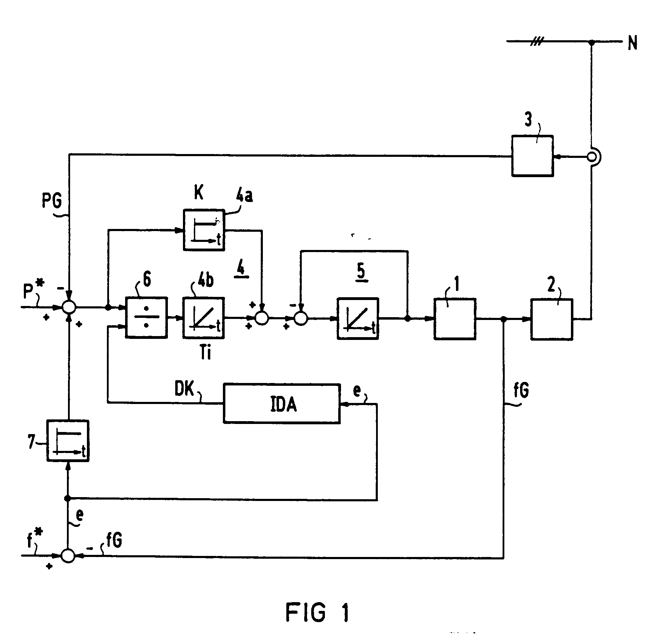

Figur 1 zeigt das Blockschaltbild zur Leistungsregelung eines Turbosatzes, welcher aus der Turbine 1 und dem mit ihr mechanisch gekuppelten Generator 2 besteht, dessen mittels eines Leistungsmeßgliedes 3 erfaßte elektrische Leistung PG durch einen Leistungsregler 4 so beeinflußt werden soll, daß an das Netz N eine dem Leistungssollwert P* entsprechende Leistung abgegeben wird. Zur Betätigung der Turbinenventile ist ein unterlagerter Öffnungsregelkreis 5 vorgesehen, dessen Sollwert im Ausgangssignal des Leistungsreglers 4 besteht. Der Leistungsregler 4 weist PI-Verhalten auf und besteht in der in Figur 1 beispielhaft wiedergegebenen Realisierung aus einem Proportionalglied 4a mit dem Verstärkungsfaktor K und einem diesen parallel angeordneten Integrator 4b, welcher die Integrierzeit $T_i$ aufweist. Im Eingangskreis des Integrators 4b ist ein Quotientenbildner 6 angeordnet, dessen Quotienteneingang von der Ausgangsgröße DK einer mit IDA bezeichneten Einrichtung beaufschlagt wird, womit die Nachstellzeit des PI-Leistungsreglers 4 um den Wert DK vervielfacht wird. Der Leistungsregler 4 wird mit der Differenz zwischen dem Leistungssollwert P* und dem der abgegebenen Generatorleistung entsprechenden Leistungsistwert PG beaufschlagt, wobei zu dieser Differenz noch eine der Abweichung e zwischen dem Netzfrequenzsollwert f* und der Netzfrequenz entsprechende und mittels eines Proportionalgliedes 7 verstärkte Größe addiert wird. Dies dient in üblicher Weise zur Bildung des sogenannten Statikeinflusses, d.h. der Abhängigkeit der abgegebenen Generatorleistung von der Frequenz des Netzes. Eine der Netzfrequenz entsprechende Größe fG kann von einem die Generatordrehzahl erfassenden Gleichstromdynamo geliefert werden.

Normalerweise arbeitet der Turbosatz 1, 2 bzw. das Netz N im Verbundbetrieb und die Frequenzabweichung e ist praktisch Null bzw. schwingt mit sehr kleiner Amplitude um den Wert Null. Kommt es nun zu einer Inselbildung, d.h. der Herauslösung des Netzes N aus dem Netzverbund, mit damit einhergehenden aufklingenden, die Betriebsstabilität gefährdenden Netzfrequenzschwingungen, dann tritt eine mit IDA bezeichnete Einrichtung in Aktion, welche diese aufklingenden Frequenzschwingungen des Netzes N als solche identifiziert und im Anschluß daran mit einem von ihr ausgegebenen Dämpfungskorrektursignal DK adaptiv die Dämpfung der Leistungsregelung stetig solange vergrößert, bis die aufklingenden Netzfrequenzschwingungen verschwinden, d.h. die Eingangsgröße e der Einrichtung IDA wieder ihre Normalwarte erreicht. Bei der Einrichtung IDA handelt es sich also um eine Identifikations-und Adaptionseinrichtung. Als dämpfungsbestimmender Parameter des Leistungsreglers wird beim dargestellten Beispiel dessen Nachstellzeit vergrößert, was mittels des Quotientenbildners 6 im Eingangskreis des Integrators 4b geschieht, indem die Nachstellzeit des PI-Leistungsreglers 4 mit einem der Ausgangsgröße DK der Einrichtung IDA entsprechenden Faktor vervielfacht wird. Es kann sich bei entsprechender Struktur der dem Leistungsregler 4 nachgeordneten Regelstrecke 1, 2, 5 und N empfehlen, bei aufklingenden Netzfrequenzschwingungen die Dämpfung zusätzlich zu der Vergrößerung der Nachstellzeit durch eine entsprechende Veränderung des Verstärkungsfaktors K des Proportionalverstärkers 4a zu vergrößern.

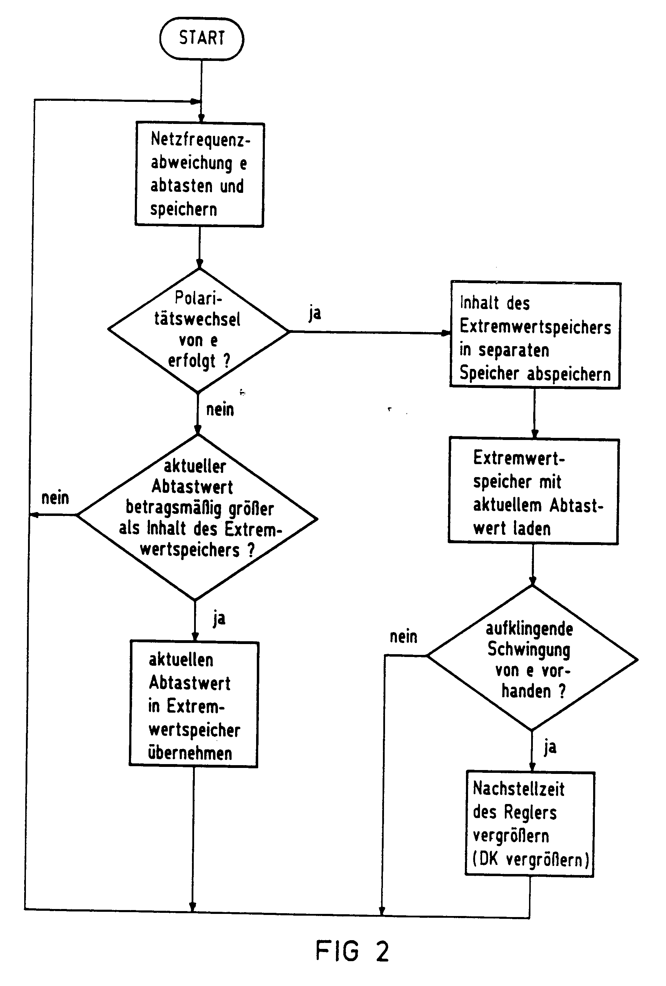

Der Ablaufplan gemäß Figur 2 erläutert das erfindungsgemäße Verfahren und damit auch die Wirkungsweise der Identifikations- und Adaptionseinrichtung IDA. Nach der Start- bzw. Initialisierungsphase, in welcher für definierte Anfangszustände gesorgt wird, findet laufend eine Abtastung und Speicherung des analogen Frequenzabweichungssignals e, sowie ein Vergleich dieses abgetasteten Analogwertes mit dem Inhalt eines Extremwertspeichers statt. Ist der aktuelle Abtastwert betragsmäßig größer als der Inhalt des Extremwertspeichers, wird er in den Extremwertspeicher übernommen. Tritt ein Polaritätswechsel des Frequenzabweichungssignal e auf, was beispielsweise durch Vergleich der Polarität des aktuellen Abtastwertes mit der Polarität des vorherigen Abtastwertes erkannt werden kann, dann wird der Inhalt des Extremwertspeichers in einem separaten Speicher abgelegt und der Extremwertspeicher mit dem aktuellen Abtastwert geladen, welcher sich dann in der Nähe von Null bewegt. Mehrere, vorzugsweise jedoch drei in aufeinanderfolgenden Halbwellen auf diese Weise ermittelte und in separaten Speichern abgelegte Extrema werden miteinander verglichen. Das Kriterium für eine aufklingende Schwingung ist, daß jeder der später abgespeicherten Extremwerte größer sein muß als der zuvor abgespeicherte Wert. Wird mit diesem Kriterium eine aufklingende Schwingung festgestellt, dann wird das Ausgangssignal DK vergrößert und damit der Leistungsregelkreis stärker bedämpft, was solange fortgesetzt wird, bis keine aufklingende Schwingung mehr festgestellt wird.

Eine in der Figur 2 nicht wiedergegebene, zweckmäßige Variante des erfindungsgemäßen Verfahrens besteht darin, nach erfolgter Vergrößerung der Nachstellzeit, diese probeweise, gegebenenfalls in einzelnen Schritten, wieder rückgängig zu machen, wenn längere Zeit keine aufklingenden Netzfrequenzschwingungen mehr festgestellt werden.

Die Identifikations- und Adaptionseinrichtung IDA läßt sich recht einfach mittels eines programmgesteuerten Mikroprozessors realisieren, dem eingangsseitig eine taktgesteuerte Abtasteinrichtung für die der Netzfrequenzabweichung e proportionale Spannung zugeordnet ist. Es wird jeweils der aktuelle Abtastwert und der unmittelbar zuvor abgetastete Wert zwischengespeichert und diese Werte werden von dem entsprechend dem Ablaufplan nach Figur 2 programmierten Mikroprozessor zu dem Dämpfungskorrektursignal DK verarbeitet. Bei Verwendung eines Mikroprozessors bietet es sich an, die Funktionen des Leistungsreglers 4 und zum Teil auch die des Öffnungsreglers 5 ebenfalls von diesem Mikroprozessor durchführen zu lassen.

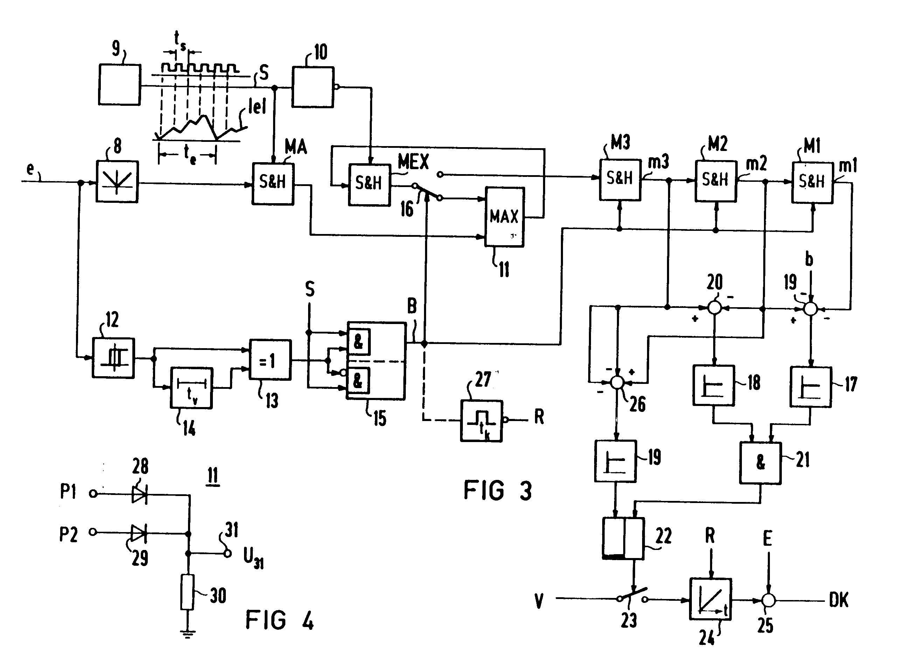

Die Figur 3 zeigt ein Beispiel für die gerätetechnische Realisierung des erfindungsgemäßen Verfahrens mittels diskreter Bauelemente. Als Speicherglieder für die abgetasteten Analogwerte der Frequenzabweichung e und ihrer Extrema sind sogenannte Sample-and Hold-Verstärker verwendet, welche die Eigenschaft haben, daß sie auf einen Impuls an ihrem Takteingang den an ihrem Analogsignaleingang anliegenden Spannungswert übernehmen und bis zum nächsten Eintreffen des darauffolgenden Taktimpulses beibehalten. Sampleand Hold-Verstärker sind handelsüblich erhältliche Bauelemente.

Die der Abweichung der Generatordrehzahl fG bzw. der Netzfrequenz von einem konstanten Wert f* proportionale Spannung e wird von einem Betragsbildner 8 gleichgerichtet und einem ersten Sample-and Hold-Verstärker MA zugeführt. Der Eingangssignalbereich dieses Verstärkers braucht wegen dieser Gleichrichtung der Netzfrequenzabweichung e nur für positive Werte ausgelegt zu werden. Die Ausgangsspannung $|e|$ des Betragsbildners 8, deren Verlauf beispielhaft in Figur 3 skizziert ist, wird nach Maßgabe der von einem Taktgenerator 9 ausgegebenen Rechteckimpulse S mit der Periodendauer $t_s$ und dem Tastverhältnis 2 (Impulsdauer = Impulspause) abgetastet. Die Halbperiodendauer der Eingangsspannung e bzw. die Halbperiodendauer der ihr entsprechenden Netzfrequenzschwingung ist mit $t_e$ verdeutlicht. Während ein neuer Abtastwert jeweils beim Eintreffen einer ansteigenden Flanke der Abtastimpulse S in den Speicher MA übernommen wird, wird beim Auftreten der darauffolgenden negativen Impulsflanke, d.h. zu Beginn der darauffolgenden Abtastimpulspause von einem Extremwertspeicher MEX das am Ausgang einer Maximalwert-Auswahlschaltung 11 anliegende Signal übernommen, weil der Takteingang des Sample-and Hold-Verstärkers MEX über ein Invertierglied 10 von den Abtastimpulsen S angesteuert wird. Die Maximalwert-Auswahlschaltung 11 hat die Eigenschaft, daß als Ausgangssignal stets das größere ihrer beiden Eingangssignale erscheint. Eingangsseitig wird die Maximalwert-Auswahlschaltung 11 vom Ausgang des den aktuellen Abtastwert enthaltenden Speicher MA und vom Ausgangssignal des Extremwertspeichers MEX beaufschlagt. So wird in einfacher Weise erreicht, daß nur dann, wenn der aktuelle Abtastwert größer als der jeweilige Inhalt des Extremwertspeichers ist, dieser in den Extremwertspeicher übernommen wird, während im anderen Fall der Inhalt des Extremwertspeichers unverändert bleibt. Am Ende jeder Halbwelle weist also der Inhalt des Extremwertspeichers MEX den betragsmäßig größten innerhalb dieser Halbwelle abgetasteten Wert der Netzfrequenzabweichung e auf.

Das erfindungsgemäße Verfahren erfordert die Identifikation von Polaritätswechseln der Netzfrequenzabweichung e. Man könnte daran denken, dies mittels zweier Speicher durchzuführen, von denen der eine jeweils die Polarität des aktuellen und der andere die Polarität des zuvor abgetasteten Werts speichert. Eine weniger aufwendigere Lösung zum Erkennen der Polaritätswechsel besteht bei der Anordnung gemäß Figur 3 darin, die der Netzfrequenzabweichung entsprechende Spannung e einem Grenzwertmelder 12 zuführen, dessen Ausgangssignal den einen Eingang eines Exklusiv-ODER-Gatters 13 unmittelbar und den zweiten Ausgang dieses Gatters über ein digitales Verzögerungsglied 14 beaufschlagt. Der Grenzwertmelder weist, wie in seinem Blocksymbol angedeutet, ein Hystereseverhalten auf, so daß ihm die beim Normalbetrieb auftretenden kleinen Pendelungen der Netzfrequenzabweichung e um den Wert Null nicht zum Ansprechen bringen können.

Die Verzögerungszeit $t_v$ des digitalen Verzögerungselements 14 liegt zwischen dem 1 1/2- und dem 2-fachen der Abtastpulsperiodendauer $t_s$. Bei jedem Polaritätswechsel der Netzfrequenzabweichung e erscheint am Ausgang des Exklusiv-ODER-Gatters 13 ein Impuls von der Dauer der Verzögerungszeit $t_v$, denn nur für diesen Zeitraum weisen seine beiden Eingangssignale unterschiedliche Werte auf. Das Ausgangssignal des Exklusiv-ODER-Gatters 13 und das hierzu invertierte Signal werden konjunktiv mit dem Abtasttakt S an den Eingängen einer bistabilen Kippstufe 15 verknüpft, so daß nach jedem Polaritätswechsel bei Auftreten des nächsten Abtasttaktes - d.h. taktsynchronisiert - am Ausgang der bistabilen Kippstufe 15 ein Impuls B erscheint, welcher mindestens eine Taktimpulsperiode $t_s$ lang andauert. Mit diesem Impuls wird ein elektronisches Schaltglied 16 betätigt sowie drei hintereinander geschaltete Sample-and-Hold-Verstärker M3, M2 und M1 veranlaßt, jeweils ihre eingangsseitigen anliegenden Spannungen zu übernehmen. Es übernimmt daher M1 den Inhalt von M2, M2 den Inhalt von M1 und M3 den Inhalt des Extremwertspeichers MEX. Bei auf diese Weise taktsynchron vom Ausgangssignal der bistabilen Kippstufe 15 betätigten Schalter 16 wird in der darauffolgenden Impulspause von der Maximalwert-Auswahlschaltung 11 der aktuelle Abtastwert zum Eingang des Extremwertspeichers MEX weitergegeben, denn der zweite Eingang der Maximalwert-Auswahlschaltung 11 ist dann nicht beaufschlagt, d.h. mit dem Wert Null belegt, und somit betragsmäßig kleiner als der sich nach dem Polaritätswechsel ergebende Abtastwert der Spannung $|e|$. Es wird also der Extremwertspeicher selbsttätig wieder auf einen kleinen, in der Nähe des Nulldurchgangs der Eingangsspannung e liegenden Wert zurückgesetzt und ist wieder vorbereitet, in der nunmehrigen Halbwelle der Eingangsspannung e deren Extremum zu ermitteln. Nach Ablauf der Verzögerungszeit $t_v$ nimmt der Schalter 16 wiederum taktsynchron die in Figur 3 dargestellte Stellung ein und die Ermittlung des Extremwerts in dieser Halbwelle beginnt in der geschilderten Art von neuem.

Das Erkennen einer aufklingenden Netzfrequenzschwingung erfolgt durch laufenden Vergleich der Inhalte $m_3$, $m_2$ und $m_1$ der Speicherglieder M3, M2 und M1 mittels zweier Grenzwertmelder 17 und 18, welche eingangsseitig von den Ausgangssignalen der Mischglieder 19 und 20 beaufschlagt sind und deren Ausgänge mit den Eingängen eines UND-Gatters 21 verbunden sind. Es erscheint am Ausgang des UND-Gatters 21 dann ein digitales H-(high)-Signal, wenn folgende Beziehungen gelten:

$$m_3 > m_2 > m_1 + b,$$

wobei b ein konstanter, kleiner Wert ist, mit dem ein Toleranz- oder Totband zur Beruhigung des Regelverhaltens realisiert werden soll. Die oben angegebene Beziehung beinhaltet, daß ein H-Signal von dem UND-Gatter 21 dann ausgegeben wird, wenn ein in einer Halbwelle ermittelter Extremwert $m_3$ größer ist als der in der vorherigen Halbwelle ermittelte Extremwert $m_2$ und wenn gleichzeitig dieser Wert $m_2$ größer als der in der wiederum zuvor liegenden Halbwelle ermittelte Extremwert $m_1$, vergrößert um den kleinen konstanten Wert b, ist. In diesem Falle wird eine bistabile Kippstufe 22 gesetzt und betätigt einen Schalter 23, sodaß der Eingang eines im Normalbetrieb auf den Wert Null gesetzten Integrators 24 mit einer Gleichspannungsquelle V positiver Polarität verbunden ist und sein Ausgangssignal sich daraufhin in positiver Richtung zeitlinear vergrößert. Wird in einem Mischglied 25 zu zu dem Ausgangssignal des Integrators 24 ein positives Gleichspannungssignal E - vorzugsweise vom Wert 1 - hinzugefügt, dann verändert sich das Dämpfungskorrektursignal DK der Identifizierungs- und Adaptionseinrichtung IDA, welches gemäß Figur 1 dem Quotienteneingang des Dividierers 6 zugeführt ist, ausgehend vom Wert der Gleichspannung E solange, bis die bistabile Kippstufe 22 durch ein H-Signal am Ausgang eines dritten Grenzwertmelders 19 zurückgesetzt und der Schalter 23 damit wieder geöffnet wird. Dies erfolgt dann, wenn das Ausgangssignal eines Mischgliedes 26 einen positiven Wert annimmt, d.h. die Beziehung gilt:

$$m_3 < m_2/2.$$

Es wird also die Veränderung des dämpfungsbestimmenden Parameters des Leistungsreglers, nämlich die Vergrößerung seiner Nachstellzeit dann beendet, wenn der in einer Halbwelle ermittelte Extremwert kleiner geworden ist als die Hälfte des in der vorigen Halbwelle ermittelten Extremwertes.

Treten für längere Zeit keine aufklingenden Netzfrequenzschwingungen e mehr auf, dann kann es sich empfehlen, die Dämpfung des Regelkreises probeweise wieder auf ihren alten Wert zurückzuführen, was durch Nullsetzen des Integrators mittels des Rücksetzsignales R erfolgt. Dieses Rücksetzsignal kann, wie in Figur 3 angedeutet, vom Ausgangssignal B der bistabilen Kippstufe 15 abgeleitet werden, welche eine monostabile, nachtriggerbare Kippstufe 27 beaufschlagt. Das invertierte Ausgangssignal dieser Kippstufe setzt den Integrator 24 auf den Wert Null. Die Kippzeit $t_K$ der monostabilen Kippstufe 27 beträgt ein Mehrfaches der erwarteten Halbperiodendauer $t_e$ der Netzfrequenzschwingungen, welche sich erfahrungsgemäß in der Größenordnung von 10 Sekunden bewegt.

Figur 4 zeigt beispielhaft eine einfache Realisierung der Maximalwert-Auswahlschaltung 11. Zwei positive Potentiale P1 und P2 sind an zwei Dioden 28 und 29 gelegt, welche kathodenseitig über einem Widerstand 30 mit Null- oder Bezugspotential verbunden sind. Die Spannung U31 an der Ausgangsklemme 31 entspricht immer dem höheren der beiden Eingangspotentiale P1 bzw. P2.

Das vorliegende Verfahren ist nicht nur zur Adaption des Leistungsreglers eines Turbogenerators verwendbar, es ist vielmehr ganz allgemein geeignet für Regelkreise, bei denen mit unkontrolliert aufklingenden Regelschwingungen und damit einhergehender Instabilität zu rechnen ist.

**Patentansprüche**

1. Verfahren zur Stabilisation eines schwingungsfähigen elektrischen Versorgungsnetzes, wobei ein der Netzfrequenz proportionales Signal erfaßt wird, während aufeinanderfolgenden Halbwellen dieses Signals maximale Signalwerte ermittelt, abgespeichert und zum Erkennen einer Schwingung miteinander verglichen werden und nach Erkennen einer aufklingenden Schwingung mindestens ein Parameter eines die Leistung, die Spannung oder die Frequenz bestimmenden Reglers so verändert wird, daß die Schwingung abgedämpft wird.

2. Verfahren nach Anspruch 1 zur Adaption des Reglers, insbesondere des Leistungsreglers eines Turbogenerators, **gekennzeichnet** durch folgende Schritte:
   a) Eine der Abweichung (e) der Netzfrequenz (fG) von einem konstanten Wert (f*) proportionale Spannung wird abgetastet, gespeichert, betragsmäßig mit dem Inhalt eines Extremwertspeichers (MEX) verglichen und in den Extremwertspeicher (MEX) übernommen, wenn der Betrag des aktuellen Abtastwerts größer ist als der Inhalt des Extremwertspeichers;
   b) bei jedem Polaritätswechsel der Netzfrequenzabweichung (e) wird nach Abspeicherung des Inhalts des Extremwertspeichers dieser mit dem aktuellen Abtastwert geladen;
   c) zeitlich aufeinanderfolgend abgespeicherte Inhalte der Speicher werden zum Erkennen einer Schwingung miteinander verglichen;
   d) mindestens ein dämpfungsbestimmender Parameter des Reglers wird bei Erkennung einer aufklingenden Schwingung der Netzfrequenzabweichung (e) stetig im Sinne einer Vergrößerung der Dämpfung solange verändert, bis der Betrag eines gemäß Schritt b zeitlich später abgespeicherten Extremums ($m_3$) kleiner als der Betrag des zeitlich zuvor ab gespeicherten Extremums ($m_2$) geworden ist.

3. Verfahren nach Anspruch 1 oder 2, **dadurch gekennzeichnet,** daß nach Beendigung der Dämpfungsvergrößerung die Dämpfung probehalber schrittweise verkleinert wird.

4. Verfahren nach einem der vorhergehenden Ansprüche, **dadurch gekennzeichnet,** daß jeweils drei zeitlich aufeinanderfolgende Extrema ($m_1$, $m_2$, $m_3$) miteinander verglichen werden, wobei zur Beruhigung des Betriebsverhaltens der Vergleich der beiden früher ermittelten Extrema ($m_1$, $m_2$) unter Berücksichtigung eines Toleranz- bzw. Totbandes (b) erfolgt.

5. Verfahren nach einem der vorhergehenden Ansprüche, **dadurch gekennzeichnet,** daß ein oder mehrere dämpfungsbestimmende Parameter solange verändert werden, bis der Betrag eines gemäß Schritt b zeitlich später abgespeicherten Extremums ($m_3$) kleiner als die Hälfte des zeitlich zuvor abgespeicherten Extremums ($m_2$) geworden ist.

6. Einrichtung zur Durchführung des Verfahrens nach einem der vorhergehenden Ansprüche, **gekennzeichnet** durch eine taktgesteuerte Abtasteinrichtung für eine der Netzfrequenzabweichung (e) proportionale Spannung, wobei jeweils der aktuelle Abtastwert und der unmittelbar zuvor abgetastete Wert in Zwischenspeichern abgelegt werden, deren Ausgangssignale über einen Datenbusmittels eines Adreßbusses und einer Lesesteuerung einem programmgesteuerten Mikroprozessors zugeführt werden, welcher Polaritätswechsel der abgetasteten Werte identifiziert, jeweils zwischen zwei aufeinanderfolgenden Polaritätswechseln Extremwerte ermittelt und abspeichert sowie aufeinanderfolgend abgespeicherte Extremwerte zur Erkennung einer aufklingenden Schwingung miteinander vergleicht und nach deren Erkennung ein Dämpfungskorrektursignal (DK) an den die Leistung, die Spannung oder die Frequenz bestimmenden Regler gibt.

7. Einrichtung zur Durchführung des Verfahrens nach einem der Ansprüche 2 bis 4, **dadurch gekennzeichnet,** daß zur Abtastung und Speicherung ein mit Taktimpulsen (S) betätigter erster Sample-and-Hold-Verstärker (MA) verwendet ist, dessen Ausgang über eine Maximalwert-Auswahlschaltung (11) mit dem Eingang eines zweiten, während der Pausen der Taktimpulse betätigten Sample-and-Hold-Verstärkers (MEX) verbunden ist, dessen Ausgangssignal den anderen Eingang der Maximalwert-Auswahlschaltung beaufschlagt, wobei die gleichgerichtete Netzfrequenzabweichung (e) abgetastet wird und zum zeitlichen Erfassen ihrer Polaritätswechsel ein von dieser beaufschlagter Grenzwertmelder (12) vorgesehen ist, dessen Ausgangssignal einem Exklusiv-ODER-Gatter (13) unmittelbar sowie über ein Verzögerungsglied (14) zugeführt ist, wobei vom Ausgangssignal des Exklusiv-ODER-Gatters (13) taktsynchron sowohl mehrere hintereinandergeschaltete weitere Sample-and-Hold-Verstärker (M3, M2, M1) gesteuert werden, als auch ein Schaltglied (16) betätigt wird, welches den Ausgang des zweiten, als Extremwertspeicher verwendeten Sample-and-Hold-Verstärkers (MEX) mit dem Eingang des ersten (M3) hintereinandergeschalteten Sample-and-Hold-Verstärker (M3, M2, M1) verbindet, deren Ausgangssignale zum Erkennen einer aufklingenden Schwingung über eine Mischglieder, Grenzwertmelder, Gatter und Kippstufen enthaltende Schaltung (7 - 21, 22, 26) zu einem Schaltsignal verknüpft sind, womit ein Korrektursignal (DK) für die Dämpfung eines die Leistung, die Spannung oder die Frequenz bestimmenden Reglers verändert wird.

**Claims**

1. Method for stabilizing an oscillatory electrical supply network, in which a signal which is proportional to the network frequency is detected; during successive half waves of this signal maximum signal values are determined, stored and, for the purpose of recognizing an oscillation, compared with each other; and after recognition of an oscillation which is increasing in amplitude at least one parameter of a controller which determines the output, the voltage or the frequency is varied in such a way that the oscillation is damped.

2. Method according to claim 1 for the purpose of adapting the controller, in particular the output controller of a turbo-generator, characterised by the following steps:
   a) a voltage which is proportional to the deviation (e) of the network frequency (fG) from a constant value (f*) is scanned, stored, compared in terms of magnitude with the content of an extreme value memory (MEX) and transferred to the extreme value memory (MEX) if the magnitude of the current scan value is greater than the content of the extreme value memory;

b) with each polarity reversal of the network frequency deviation (e), after storage of the content of the extreme value memory the latter is loaded with the current scan value;

c) temporally successively stored contents of the memories are compared with each other for the purpose of recognizing an oscillation;

d) at least one damping-determining parameter of the controller is varied, in the case of recognition of an oscillation of the network frequency deviation (e) which is increasing in amplitude, continuously for the purpose of increasing the damping until the magnitude of an extreme ($m_3$) which is stored later temporally according to step b has become smaller than the magnitude of the extreme ($m_2$) stored previously temporally.

3. Method according to claim 1 or 2, characterised in that at the end of the increase in damping, the damping is reduced stepwise as a test.

4. Method according to one of the preceding claims, characterised in that in each case three temporally successive extremes ($m_1$, $m_2$, $m_3$) are compared with each other, in which case for the purpose of steadying the operational behaviour the comparison of the two extremes ($m_1$, $m_2$) determined earlier occurs in consideration of a tolerance band or dead band (b).

5. Method according to one of the preceding claims, characterised in that one or several damping-determining parameters are varied until the magnitude of an extreme ($m_3$) stored later temporally according to step b has become smaller than half the extreme ($m_2$) stored previously temporally.

6. Device for carrying out the method according to one of the preceding claims, characterised by a clock-controlled scanning device for a voltage which is proportional to the network frequency deviation (e), in which case respectively the current scan value and the value scanned directly before are stored in intermediate memories, the output signals of which are fed by way of a data bus means of an address bus and a read control to a program-controlled microprocessor, which identifies polarity reversal of the scanned values, in each case between two successive polarity reversals determines and stores extreme values and also compares successively stored extreme values with each other for the purpose of recognizing an oscillation which is increasing in amplitude and after recognition thereof transmits a damping correction signal (DK) to the controller which determines the output, the voltage or the frequency.

7. Device for carrying out the method according to one of the claims 2 to 4, characterised in that a first sample-and-hold amplifier (MA) actuated with clock pulses (S) is used for the purposes of scanning and storage, the output of which amplifier is connected by way of a maximum value-selecting circuit arrangement (11) to the input of a second sample-and-hold amplifier (MEX) actuated during the interpulse periods of the clock pulses, the output signal of which amplifier is applied to the other input of the maximum value-selecting circuit arrangement, with the rectified network frequency deviation (e) being scanned and there being provided for the temporal detection of its polarity reversals a limiting value indicator (12) to which it is applied and the output signal of which is fed to an exclusive-OR-gate (13) directly and also by way of a delay element (14), in which case the output signal of the exclusive-OR-gate (13) in clock-controlled synchronism both controls several series-connected further sample-and-hold amplifiers (M3, M2, M1) and actuates a switching element (16) which connects the output of the second sample-and-hold amplifier (MEX) used as an extreme value memory with the input of the first (M3) series-connected sample-and-hold amplifier (M3, M2, M1), the output signals of which, for the purpose of recognizing an oscillation which is increasing in amplitude, by way of a circuit arrangement (7 - 21, 22, 26) containing mixing elements, limiting value indicators, gates and flip-flops, are combined to give a switch signal, whereby a correction signal (DK) for damping a controller determining the output, the voltage or the frequency is varied.

**Revendications**

1. Procédé pour stabiliser un réseau d'alimentation électrique sujet à oscillations, selon lequel un signal proportionnel à la fréquence du réseau est détecté, les valeurs maximales du signal sont déterminées, alors que des alternances successives de ce signal sont mémorisées et sont comparées entre elles pour l'identification d'une oscillation et, qu'après identification d'une oscillation arrivante, au moins un paramètre d'un régulateur qui détermine la puissance, la tension ou la fréquence, est modifié en sorte que l'oscillation est amortie.

2. Procédé suivant la revendication 1 pour l'adaptation d'un régulateur, notamment du régulateur de puissance d'un turbo-alternateur, caractérisé par les étapes suivantes :

a) une tension proportionnelle à l'écart (e) entre la fréquence du réseau (fG) et une valeur constante (f*) est échantillonnée, mémorisée, comparée, quant à sa valeur absolue, au contenu d'une mémoire de valeurs extrêmes (MEX) et est transférée dans la mémoire de valeurs extrêmes (MEX) lorsque la valeur absolue de la valeur réelle d'échantillonnage est supérieure au contenu de la mémoire de valeurs extrêmes;

b) lors de chaque changement de polarité de l'écart (e) de la fréquence du réseau, et après mémorisation du contenu de la mémoire de valeurs extrêmes, la valeur actuelle d'échantillonnage est chargée dans cette mémoire;

c) des contenus des mémoires, successivement mémorisés dans le temps, sont comparés entre eux pour l'identification d'une oscillation;

d) au moins un paramètre du régulateur, qui détermine l'atténuation, est modifié de façon continue, lors de l'identificatdion d'une oscillation arrivante de l'écart (e) de la fréquence du réseau, dans le sens d'un accroissement de l'atténuation jusqu'à ce que la valeur absolue d'un extremum (m₃) mémorisé ultérieurement conformément à l'étape b), est devenue inférieure à la valeur absolue de l'extremum (m₂) mémorisé auparavant.

3. Procédé suivant la revendication 1 ou 2, caractérisé par le fait qu'à la fin de l'accroissement de l'atténuation, ce dernier est réduit pas-à-pas en fonction de l'échantillon.

4. Procédé suivant l'une des revendications précédentes, caractérisé par le fait que respectivement trois extrema successifs (m₁, m₂, m₃) sont comparés entre eux et que pour calmer le comportement de fonctionnement, la comparaison des deux extrema (m₁, m₂) déterminés antérieurement est exécutée en tenant compte d'une bande de tolérance ou zone morte (b).

5. Procédé suivant l'une des revendications précédentes, caractérisé par le fait qu'un ou plusieurs paramètres déterminant l'affaiblissement sont modifiés jusqu'à ce que la valeur d'un extremum (m₃) mémorisé ultérieurement et conformément au pas b est devenue inférieure à la moitié de l'extremum (m₂) mémorisé antérieurement.

6. Dispositif pour la mise en oeuvre du procédé suivant l'une des revendications précédentes, caractérisé par un dispositif d'échantillonnage, commandé de façon cadencée, pour une tension proportionnelle à l'écart (e) de la fréquence du réseau, la valeur réelle d'échantillonnage et la valeur échantillonnée directement auparavant étant respectivement mémorisées dans des mémoires intermédiaire, dont les signaux de sortie sont envoyés, par l'intermédiaire d'un moyen en forme de bus de transmission de données d'un bus d'adresse et d'une unité de commande de lecture, à un microprocesseur commandé par programme, qui identifie un changement de polarité des valeurs échantillonnées, détermine et mémorise des valeurs extrêmes respectivement entre deux changements successifs de polarité et qui compare entre elles les valeurs extrêmes mémorisées successivement, pour l'identification d'une oscillation qui apparaît et, qui après identification de cette oscillation, envoie un signal de correction de l'atténuation (DK) au régulateur qui détermine la puissance, la tension ou la fréquence.

7. Dispositif pour la mise en oeuvre du procédé suivant l'une des revendications 2 à 4, caractérisé par le fait que pour l'échantillonnage et la mémorisation, on utilise un premier amplificateur d'échantillonnage et de blocage (MA), qui est actionné par des impulsions de cadence, et dont la sortie est raccordée par l'intermédiaire d'un circuit de sélection de valeur maximale (11) à l'entrée d'un second amplificateur d'échantillonnage et de blocage (MEX), qui est actionné pendant les pauses entre les impulsions de cadence et dont le signal de sortie charge l'autre entrée du circuit de sélection de valeurs maximales, l'écart redressé (e) de la fréquence du réseau étant échantillonné et qu'il est prévu, pour la détection, dans le temps, de son changement de signe, un transmetteur de valeurs limitées (12), qui est chargé par cet écart et dont le signal de sortie est envoyé directement, et par l'intermédiaire d'un circuit de retardement (14), à une porte OU-Exclusif (13), alors que plusieurs autres amplificateurs d'échantillonnage et de blocage (M3,M2,M1), branchés en série et qu'également, un circuit de commutation (16) sont actionnés d'une manière synchrone du point de vue de la cadence, par le signal de sortie de la porte OU-Exclusif (13), ce circuit de commutation reliant la sortie du second amplificateur d'échantillonnage et de blocage (MEX) utilisé en tant que mémoire de valeurs extrêmes à l'entrée du premier (M3) des amplificateurs d'échantillonnage et de blocage (M3,M2,M1) branchés en série, dont les signaux de sortie sont combinés pour l'identification d'une oscillation arrivante, par l'intermédiaire d'un circuit (7-21,22,26) contenant des éléments des circuits mélangeurs, des transmetteurs de valeurs limites, des portes et des étages à bascule, pour former un signal de commutation, ce qui entraîne une modification du signal de correction (DK) pour l'atténuation d'un régulateur déterminant la puissance, la tension ou la fréquence.

FIG 1

FIG 2

EP 0 404 779 B1

FIG 3

FIG 4